Europäisches Patentamt

European Patent Office

Office européen des brevets

(19)

(11) Veröffentlichungsnummer: **0 224 825**
**B1**

(12) **EUROPÄISCHE PATENTSCHRIFT**

(45) Veröffentlichungstag der Patentschrift:
**25.07.90**

(51) Int. Cl.⁵: **F16F 9/06**

(21) Anmeldenummer: **86116217.0**

(22) Anmeldetag: **22.11.86**

(54) **Hydraulische Blockierfeder.**

(30) Priorität: **03.12.85 DE 3542653**

(43) Veröffentlichungstag der Anmeldung:
**10.06.87 Patentblatt 87/24**

(45) Bekanntmachung des Hinweises auf die Patenterteilung:
**25.07.90 Patentblatt 90/30**

(84) Benannte Vertragsstaaten:
**AT BE CH DE ES FR GB IT LI NL SE**

(56) Entgegenhaltungen:
**DE-A- 1 800 020**
**DE-A- 2 513 302**
**DE-U- 1 930 914**
**GB-A- 2 095 363**

(73) Patentinhaber: **Ignaz Vogel GmbH & Co KG,
Fahrzeugsitze, Kleinsteinbacher Strasse 42-44,
D-7500 Karlsruhe 41-Stu(DE)**

(72) Der Erfinder hat auf seine Nennung verzichtet

(74) Vertreter: **Trappenberg, Hans, Postfach 1909,
D-7500 Karlsruhe 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine hydraulische Blockierfeder, bei der in einem zylindrischen Federgehäuse ein in einem Zylinder geführter Kolben mit nach außen führender Kolbenstange zwischen zwei über ein Auslöseventil miteinander verbindbaren Zylinderräumen hydraulisch blockiert ist, wobei das Auslöseventil bei der der Kolbenstangen-Ausführung gegenüberliegenden Stirnseite des Gehäuses angeordnet und über einen axial verschiebbaren Auslösestift bedienbar ist und in geöffnetem Zustand Ventilwege einerseits zu dem anschließenden Zylinderraum und andererseits zu einem hydraulischen Druckspeicher freigibt. Eine solche Blockierfeder zeigt beispielsweise die DE-A-1,800,020.

Die Schwierigkeit bei derartigen bekannten Federn liegt darin, daß die Hydraulikflüssigkeit stets unter einem bestimmten Druck gehalten werden muß, um Leckverluste, Gaseinschlüsse, insbesondere aber Volumenveränderungen durch Temperatureinfluß zu eliminieren. Dies geschieht dadurch, daß jeweils beim Verstellen der Blockierfeder von einem externen Druckspeicher Druck auf die Hydraulikflüssigkeit übertragen oder ein bestimmtes Flüssigkeitsvolumen in den Druckspeicher zurückgefördert wird. Die erfindungsgemäße Blockierfeder arbeitet mit einem externen Druckspeicher, bei dem also die Normalisierung des Drucks immer nur beim Auslösen des Ventils beziehungsweise beim Verstellen der Feder erfolgt.

Die Bezeichnung "Blockierfeder" ist deshalb korrekt, weil der Druckspeicher bei ausgelöstem Ventil auf die Aktivseite des Kolbens drückt, so daß die Kolbenstange aus dem Gehäuse herausgedrückt und bei Schließen des Ventils in einer beliebigen Stellung blockiert wird.

Die angeführten Volumenveränderungen durch Temperatureinfluß können, wie die Praxis bewiesen hat, soweit gehen, daß die Blockierfeder zerstört wird und hierbei, durch den hohen Gasdruck, weitere Beschädigungen an umliegenden Konstruktionsteilen oder gar Personenschäden eintreten können. Um diese Zerstörung zu vermeiden, wird nach der Erfindung vorgeschlagen, daß in die Ventilführung in der Stirnseite des Federgehäuses ein entgegen der Öffnungsrichtung zusammendrückbares Elastomer eingefügt ist. Dadurch kann bei extrem starker Volumenvergrößerung das Ventil zurückgedrückt werden, so daß ein Druckausgleich mit dem Druckspeicher stattfinden kann.

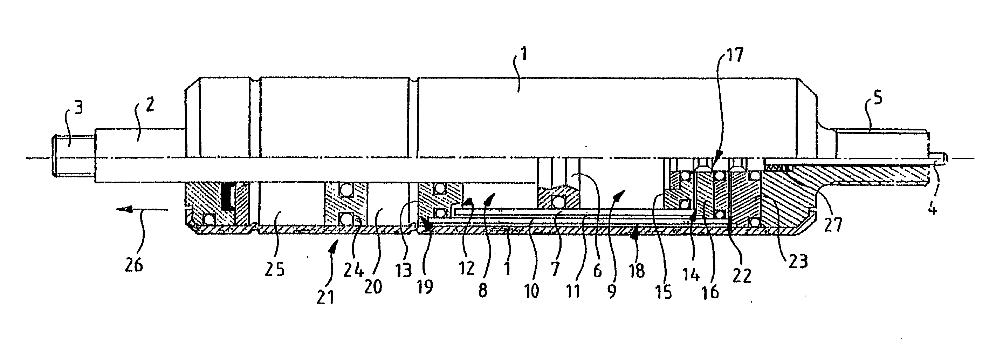

Auf der Zeichnung ist ein Ausführungsbeispiel des Erfindungsgegenstandes schematisch dargestellt.

Aus einem Federgehäuse (1) zylindrischer Form tritt einerseits eine Kolbenstange (2) mit Anschlußgewinde (3) und andererseits ein Auslösestift (4), jeweils axial verschiebbar, aus. Zum Verschrauben der Blockierfeder ist an der Stirnseite jenseits der Kolbenstange (2) ein Schraubgewinde (5) vorgesehen. Der zu der Kolbenstange (2) gehörende Kolben (6) läuft in einem Zylinder (7), der durch den Kolben (6) in zwei Zylinderräume (8, 9) unterteilt ist. Mit geringem Abstand um diesen Zylinder (7) herumgelegt ist ein Zylindermantel (10). Dieser Zylindermantel (10) befindet sich im geringen Abstand von dem zylindrischen Federgehäuse (1). Der Zwischenraum (11) zwischen dem Zylinder (7) und dem Zylindermantel (10) ist einerseits über eine Aussparung (12) in einem Abschlußstück (13) mit dem Zylinderraum (8) und andererseits über einen scheibenförmigen Zwischenraum (14) zwischen einem Endstück (15) und einer Ventilscheibe (16) mit dem Ventil (17) verbunden. Der Zwischenraum (18) zwischen dem Zylindermantel (10) und dem Federgehäuse (1) ist einerseits über einen im Abschlußstück (13) vorgesehenen Überströmkanal (19) mit der Hydraulikseite (20) eines Druckspeichers (21) und andererseits wiederum mit einem scheibenförmigen, zum Ventilsitz hin führenden Zwischenraum (22) zwischen der Ventilscheibe (16) und einer Endscheibe (23) verbunden.

Der Druckspeicher (21) wird gebildet durch einen Freikolben (24), der im Federgehäuse (1) längs verschiebbar ist. Dieser zur Stirnseite des Federgehäuses (1) abgeschlossene Raum ist mit Druckgas gefüllt, so daß ein steter Druck auf die Hydraulikseite (20) ausgeübt wird.

Zum Verstellen der Blockierfeder nach der Erfindung muß der Auslösestift (4) gedrückt werden, wobei das Ventil (17) in der Zeichenebene nach links von seinen Dichtungen heruntergeschoben wird. Dadurch kann die Hydraulikflüssigkeit, dem Druck des Freikolbens (24) folgend, über den Zwischenraum (18), den scheibenförmigen Zwischenraum (22), den scheibenförmigen Zwischenraum (14), den Zwischenraum 11 und der Aussparung (12) in den Zylinderraum (8) und über den Ventilraum direkt in den Zylinderteil (9) gelangen. Dadurch wird der Kolben (6) in der Zeichenebene nach links in Richtung des Pfeiles (26) verschoben. Nach Loslassen des Auslösestiftes (4) kehrt der Ventilkörper wieder in die gezeichnete Ruhelage zurück, wodurch sämtliche Räume gegenseitig abgeschlossen sind, der Kolben also in der jeweiligen Stellung blockiert ist. Sollte beispielsweise durch sehr starke Wärmeeinwirkung eine extreme Volumenvergrößerung der Hydraulikflüssigkeit erfolgen, kann der Ventilkörper des Ventils (17) ein Elastomer (27) soweit zusammendrücken, daß die Ventilkörper von den Dichtungen herabgleiten und somit ein Druckausgleich stattfinden kann.

## Patentansprüche

Hydraulische Blockierfeder, bei der in einem zylindrischen Federgehäuse (1) ein in einem Zylinder (7) geführter Kolben (6) mit nach außen führender Kolbenstange (2) zwischen zwei über ein Auslöseventil (17) miteinander verbindbaren Zylinderräumen (8, 9) hydraulisch blockiert ist, wobei das Auslöseventil (17) bei der der Kolbenstangen-Ausführung gegenüberliegenden Stirnseite des Gehäuses (1) angeordnet und über einen axial verschiebbaren Auslösestift (4) bedienbar ist und in geöffnetem Zustand Ventilwege einerseits zu dem anschließenden Zylinderraum (9) und andererseits zu einem hydraulischen Druckspeicher (21) freigibt, dadurch gekennzeichnet, daß in die Ventilführung in der Stirnseite des Federgehäuses (1) ein entgegen der Öffnungsrichtung (26) zusammendrückbares Elastomer (27) eingefügt ist, so daß bei Überschreiten eines bestimmten Volumens der Hydraulikflüssigkeit infolge Erhöhung deren Temperatur, das Ventil (17) ausgelöst wird.

## Claims

Blockable hydraulic spring in which, in a cylindrical spring housing (1), a piston (6) guided in a cylinder (7) and provided with an outwardly extending piston rod (2) is hydraulically blocked between two cylinder chamber (8, 9) interconnected by a triggering valve (17), while the triggering valve (17) is situated at the end face of the housing (1) opposite to the end through which extends the piston rod, and is actuatable by an axially displaceable triggering peg (4), and in the open state of the valve paths opens on the one hand to the adjacent cylinder chamber (9) and on the other hand to a hydraulic pressure accumulator (2), characterised in that an elastomer (27) compressible against the direction of opening (26) is inserted in the valve guide in the end face of the spring housing (1) so that, when a predetermined volume of the hydraulic liquid is exceeded by the increase of its temperature, the valve (17) is triggered.

## Revendications

Ressort hydraulique pouvant être bloqué, dans lequel un piston (6) muni d'une tige (2) dépassant vers l'extérieur, et guidé dans un cylindre (7) à l'intérieur d'un carter cylindrique (1) de ressort, est bloqué hydrauliquement entre deux chambres cylindriques (8, 9) pouvant être reliées l'une à l'autre par l'intermédiaire d'une soupape de déclenchement (17), la soupape de déclenchement (17) étant disposée au voisinage de la face extrême du carter (1) qui est opposée à la sortie de la tige du piston, pouvant être actionnée par l'intermédiaire d'un téton déclencheur (4) pouvant coulisser axialement, et dégageant, à l'état ouvert, des voies de distribution menant d'une part à la chambre cylindrique attenante (9) et, d'autre part, à un accumulateur de pression hydraulique (21), caractérisé par le fait qu'un élastomère (27), compressible en sens inverse de la direction d'ouverture (26), est incorporé dans le guide de la soupape, dans la face extrême du carter (1) de ressort, de telle sorte que la soupape (17) soit déclenchée lors du dépassement d'un volume déterminé du fluide hydraulique, résultant d'un accroissement de la température de ce dernier.